# EUROPÄISCHE PATENTSCHRIFT

(11) **EP 0 635 536 B1**
(45) Veröffentlichungstag und Bekanntmachung des Hinweises auf die Patenterteilung: **29.04.1998**
(21) Anmeldenummer: 94114991.6
(22) Anmeldetag: 15.01.1991
(51) Int. Cl.: C08J 7/04, C09D 133/04, B32B 27/08

(54) **Mehrschichtige Verbundsysteme**
Multilayered composite systems
Système composite à plusieurs couches

(30) Priorität: 02.02.1990 DE 4003088
(43) Veröffentlichungstag der Anmeldung: 25.01.1995
(62) Teilanmeldung aus: 91100383.8
(73) Patentinhaber: Röhm GmbH, 64293 Darmstadt (DE)
(72) Erfinder: Siol, Werner, Dr., D-64297 Darmstadt (DE); Fischer, Jens-Dieter, Dr., D-64404 Bickenbach (DE); Süfke, Thomas, Dr., D-64380 Rossdorf (DE); Felger, Erwin, DE-64372 Ober-Ramstadt (DE); Frank, Klaus, D-64367 Mühltal (DE)

(56) Entgegenhaltungen:
- EP-A- 0 281 274
- CHEMICAL ABSTRACTS, vol. 113, no. 2, 9. Juli 1990, Columbus, Ohio, US; abstract no. 7727c, Seite 66 ;

## Beschreibung

### Gegenstand der Erfindung

Die Erfindung betrifft mehrschichtige Verbundsysteme aus Polyester-Kernschichten und Polyacrylat-Deckschichten.

### Stand der Technik

Gemäß der allgemeinen Definition stellen "Polyester" makromolekulare Substanzen dar, die durch die Anwesenheit von Carboxylester-Gruppen in den sich wiederholenden Einheiten der Hauptketten charakterisiert sind (vgl. H. Mark et al. Encyclopedia of Polymer Science and Technology, 2nd Ed. Vol. 12, 1 - 75, J. Wiley-Interscience 1988, R. Vieweg et al. Kunststoff-Handbuch, Bd. VIII, Polyester, Carl Hanser Verlag 1973, Ullmanns Encyclopädie der Techn. Chemie, 4. Auflage, Bd. 19, S. 61 - 88, Verlag Chemie 1980). Die Herstellungsverfahren bedienen sich dabei entweder der Selbst-Polycondensation von Hydroxycarbonsäuren oder der Polycondensation von Dicarbonsäuren mit Dihydroxyverbindungen. Die ersteren Polymeren können durch die allgemeine Formel 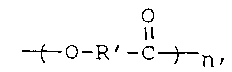 worin R' für einen geigneten Kohlenwasserstoffrest steht, wiedergegeben werden, die letzteren durch die allgemeine Formel 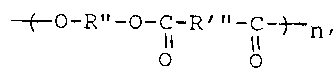 worin R'' für einen geeigneten abstandhaltenden Kohlenwasserstoffrest und R''' für den Kohlenwasserstoffrest einer Dicarbonsäure steht und n bzw. n' in beiden Fällen einen Wert besitzt, der einem Molgewicht des Polymeren von > 10 - 15 x 10³ entspricht. Von besonderer technischer Bedeutung haben sich die Polymeren erwiesen, in denen R'' für -(CH₂)ₓ steht, mit den Bedeutungen X = 2,4 oder 6 und speziell die Polymeren, worin R'' für -C₂H₄- und R''' für -C₆H₄- steht (Polyethylenterephthalat, PET) und worin R'' für -C₄H₈-steht (Polybutylenterephthalat, PBT).

Die Polyalkylenterephthalate sind im allgemeinen thermoplastisch im Spritzguß bzw. durch Extrusion verarbeitbar. Teile aus PET zeichnen sich u.a. durch Härte und gute Abriebfestigkeit bei hoher Dimensionsstabilität aus.

Sie besitzen im allgemeinen eine befriedigende Schlagzähigkeit, aber eine nur mäßige Kerbschlagzähigkeit. Das wichtigste Anwendungsgebiet für lineare Polyester stellen Chemiefasern (Polyesterfasern, Kurzzeichen PES nach DIN 60 001 T1) dar. Daneben gewinnt der Einsatz von gesättigten Polyestern als Spritzgieß- und Extrusionsformmasse sowie als Folienmaterial an Bedeutung [vgl. Kunststoff 79, 925 - 926 (1989)].

Es hat daher in der Vergangenheit nicht an Bemühungen gefehlt, die Eigenschaften dieser Massenkunststoffe zu verbessern, wobei besonderes Gewicht auf die Verbesserung der Kerbschlagzähigkeit gelegt wurde. Eine größere Zahl von Schutzrechten befaßt sich z.B. mit der Modifikation von Polyestern durch Abmischen derselben mit Polyacrylaten bzw. Mischpolymerisaten derselben.

Dem praktischen Ziel der Schlagzähmodifikation von Polyestern gilt eine größere Gruppe von Schutzrechten, wobei auf bekannte Konzepte zurückgegriffen werden konnte. Glasfaserverstärktes PBT kann beispielsweise vorteilhaft mit Methacrylat-Methylmethacrylat-Copolymeren abgemischt werden (JP-A 74 90 345; Chem. Abstr. 82 99221a) Verbesserte Umformbarkeit wird z.B. für Abmischungen von PET mit einem (teil)verseiften Methylmethacrylat-Methylacrylat-Copolymeren beansprucht (vgl. JP-A 84 47 256; Chem. Abstr. 101,131 801p). Die Ölbeständigkeit eines Gemisches aus > 50 Gew.-Teilen PMMA und < 50 Gew.-Teilen gesättigtem Polyester wie PET wird in JP-A 84 152 945 (Chem. Abstr. 102, 79 763g) hervorgehoben. Zur Verbesserung der Kerbschlagzähigkeit dient die Abmischung von Polyalkylenterephthalat mit 5 - 30 Gew.-% eines Acrylat-Pfropfpolymeren wie z.B. eines Butylacrylat-Methylmethacrylat Pfropfcopolymeren (vgl. DE-A 33 28 568).

Verbesserung der Kerbschlagzähigkeit wird laut EP-A 50 265 auch durch Abmischung von thermoplastischen Polyestern mit Kernschale-Polymerisaten, bestehend aus einer Acrylat-Zähphase als Kern und einer harten Schale aus PMMA oder Styrol erreicht.

In Verbindung mit einer Silan-Kupplungskomponente haben Mischungen von PBT und Polyacrylaten gemäß EP-A 190 030 gute Schlagzähigkeit und Dehnbarkeit. Beobachtet wird eine erniedrigte Umformtemperatur.

Aus der JP-A 87 149 746 (Chem. Abstr. 108 7017t) ist eine Michung aus PET und Polyglycidylmethacrylat und/oder Fettsäurepolyester bekannt. Pfropf-Copolymere von Tetrahydrofurfurylestern der (Meth)acrylsäure auf Poly-α-Olefine sind ebenfalls als Zusätze zu Polyestern beschrieben (vgl. DE-A 35 25 253). Masterbatches für das Einbringen von Pigmenten in Polyester stellen nach der JP-A 79 129 050 (Chem. Abstr. 92,77 480p) Ethylacrylat-Ethylen-Copolymere dar.

Der Einfluß eines Zusatzes von PMMA auf das Kristallisationsverhalten von PET wurde von V.M. Nadkarny et al. (Polym. eng. Sci., 1987, 27 (6) 451 - 457) untersucht. Praktische Anwendung als ofenfestes Geschirr wird für kristallisierbares Polyethylenterephthalat vorgesehen, das mit 4 - 29 Gew.-% eines Kern-Schale-Polymeren, beispielsweise aufgebaut aus Allylmethacrylat-Butylacrylat-Butylenglykoldiacrylat als Kern und Polymethylmethacrylat als Schale und mit 0 - 14,5 Gew.-% Polycarbonat modifiziert ist (vgl. US-A 4,713,268). Andere Modifizierungsverfahren bedienen sich eines Allylmethacrylat-Butylacrylat-Methylacrylatcopolymeren, auf das Methylmethacrylat gepfropft wurde (JP-A 82 137 347; Chem. Abstr. 98,55092k).

Der Frage der Polymerverträglichkeit in den Mischungen wird im Stand der Technik nicht explizit nachgegangen, jedoch lassen die angezeigten Verwendungen bzw. die berichteten Mattierungseffekte erkennen, daß es sich um unverträgliche Polymermischungen handelt.

So wird in der JP-A 76 75749 (Chem. Abstr. 85,124 964s) ein Perlglanzeffekt für Mischungen aus beispielsweise 70 Gew.-Teilen PMMA und 30 Gew.-Teilen PBT berichtet. Als Indiz für Polymerunverträglichkeit muß auch der berichtete Perlglanzeffekt für Kosmetikbehälter aus PET und PMMA (vgl. JP-A 82 15929; Chem. Abstr. 95, 200 978u) gewertet werden. Entsprechendes gilt für Mischungen aus PET und Methylacrylat-Methylmethadcrylat-Copolymeren (vgl.

JP-A 81 161 472; Chem. Abstr. 96,123 179s; JP-A 82 63 353; Chem. Abstr. 97,183 608z; JP-A 82 96 817; Chem. Abstr. 97,199 244p; JP-A 82 98 327; Chem. Abstr. 97,199 245q). Mit dem Zusatz von Polyacrylaten zu Polyestern wird ein Mattierungseffekt bei Filmen erreicht (EP-A 184 028). Auch die JP-A 78 133 255 (Chem. Abstr. 90,122 459k) berichtet über Perlglanzeffekte von Mischungen von Acrylatcopolymeren mit Acrylnitril und Dien-Rubber-Pfropfpolymeren und arom. Polyestern. Aus demselben Grunde muß auch für die iridisierenden ternären Polymermischungen aus PET, Polystyrol und PMMA gemäß JP-A 80 03 471 (Chem. Abstr. 92,199 282w) Unverträglichkeit angenommen werden.

Die Schlagzähmodifizierung von Polybutylenterephthalat-Kunststoffen, deren Wärmeformbeständigkeit und Witterungsbeständigkeit werden von D. Rempel in "Kunststoffe", 1986, (76) 900 - 904 dargstellt. Als Schlagzäh-Modifizierungsmittel werden z.B. mit Styrol und Methylmethacrylat gepfropfte Butadien-Styrol-Kautschuke empfohlen (vgl. NL-A 73 12 510, DE-A 30 04 942). Ebenfalls untersucht wurden mit Acrylat modifizierte Styrol-Acrylnitril-Copolymere als Schlagzäh-Komponente (z.B. DE-A 27 58 497; JP-A 84 11 347, Chem. Abstr. 100, 211 063u). In anderen Druckschriften wird der Zusatz von Ethylen(meth)acrylsäureester-Glycidylmethacrylat-Copolymeren (vgl. PCT-Int. Appl. WO 85 03 718) oder von Ethylen-Glycidylmethacrylat-Vinylacetat-Copolymeren (JP-A 78 117 049, Chem. Abstr. 90,55830j) berichtet.

Als eine weitere Mischungskomponente für Polyester zusätzlich zu Schlagzähmodifizierungsmitteln wird auch Polycarbonat eingesetzt (vgl. JP-A 76 44160, Chem. Abstr. 85,47657g; PCT Int. Appl. WP 80 00 972).

Zur Flammfestausrüstung hat man halogenhaltige Gruppen, insbesondere halogenierte Aromaten in die Polymeren eingeführt. So wird der Zusatz von Poly(pentabrombenzyl)acrylaten (JP-A 84 06248, Chem. Abstr. 100,193 020w; JP-A 84 20351, Chem. Abstr. 101,8220w, JP-A 84 20350, Chem. Abstr. 101,24542h; JP-A 84 11351, Chem. Abstr. 101,92117y) empfohlen. Auf die offenbar vorhandene Unverträglichkeit (= Nichtmischbarkeit) von Polyestern mit Poly(meth)acrylaten wurde bereits hingewiesen. Bei den Schlagzähmodifikationsmitteln erfolgt eine Phasenanbindung des Elastomeren an die Polyester-Phase über das PMMA, bzw. das Styrol-MMA-Copolymere oder über das Styrol-Acrylnitrilpolymere obwohl Verträglichkeit zwischen dem Polyester und diesem Polymeren nicht gegeben ist.

Zur Anbindung müssen in der Regel Reaktivkomponenten wie z.B. Glycidylmethacrylat copolymerisiert werden. In der Literatur wird Mischbarkeit für die Systeme Poly-ethylenadipat-PMMA und Poly-ethylensebacinat-PMMA aufgrund der beobachteten Schmelzpunktsdepression angegeben (vgl. M. Natov et al. J. Polym. Scie. Part C16, 4197 (1968)). Auch aus technischer Sicht spielen die nicht**verträglichen** Mischungen von Polyestern mit anderen Polymeren die beherrschende Rolle.

JP-Abstract 1,1295,880 in Chemical Abstracts, Vol. 113: 7727c (1990) beschreibt Druckplatten mit guter Aufnahmefähigkeit für UV-härtbare Tinten. Diese können z. B. aus einer Polyethylenterephthalat-Platte bestehen, die ein- oder beidseitig mit einem Copolymerisat aus Phenylmethacrylat, Benzylmethacrylat und/oder Styrol beschichtet ist, welches optional Zimtsäure oder deren Derivate enthält.

### Aufgabe und Lösung

Unter einer Reihe von Gesichtspunkten ist es vorteilhaft, verträgliche Polymermischungen zur Verfügung zu haben. Sie gewährleisten Homogenität des Materials und somit eine gewisse Konstanz der Materialdaten. Sie eröffnen günstige Möglichkeiten zur Modifizierung der Verarbeitungsbedingungen und zur Beeinflussung der Materialeigenschaften, insbesondere zur Herstellung von gut haftenden Verbundsystemen, bei denen eine Polyester-Kernschicht durch eine Poly(meth)acrylat-Deckschicht geschützt werden kann.

Die Erfindung betrifft mehrschichtige Verbundsysteme, aufgebaut aus Polyester P1, bestehend zu mindestens 70 Gew.-% aus Einheiten gemäß Formel I 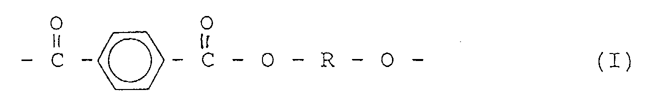 worin R für einen Rest -(CH₂)ₘ- oder für einen Rest 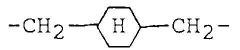 steht und wobei m für eine Zahl von 2 bis 6 steht und Poly(meth)acrylat P2, aufgebaut zu 20 - 100 Gew.-% aus halogenfreien Monomeren gemäß Formel II: 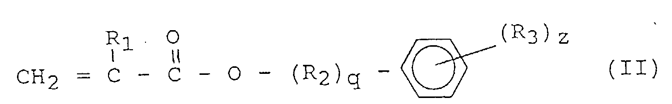 worin
- R₁: für Wasserstoff oder Methyl
- R₂: für eine abstandhaltende Gruppe mit 1 - 6 Gliedern, vorzugsweise ausgewählt aus der Gruppe der Alkylidene mit 1 bis 6 Kohlenstoffatomen in der Kette und der Gruppe -(CH₂)p-O-, wobei q null oder 1 und p eine Zahl von 2 - 6 bedeutet,
- R₃: für einen Alkylrest, Alkoxyrest oder Aminoalkyl- oder Dialkylrest mit 1 bis 6 Kohlenstoffatomen und z für null, 1 oder 2 steht
dadurch gekennzeichnet, daß das Poly(meth)acrylat P2 als Deckschicht auf dem Polyester P1 aufgebracht ist, sowie daß das Poly(meth)acrylat P2 0,1 bis 10 Gew.-% bezogen auf P2 an herkömmlichen UV-Absorbern enthält, wobei Zimtsäure und deren Derivate ausgeschlossen sind.

Die Endabsättigung der Einheiten der Formel I entspricht der üblicherweise anzutreffenden, insbesondere der von Handelprodukten. Vorzugsweise handelt es sich um die Hydroxyalkylideneinheit aus überschüssigem Diol oder um Säuregruppen aus überschüssiger Dicarbonsäure. Darüber hinaus können auch monofunktionelle Reagentien zum Kettenabschluß eingesetzt werden, beispielsweise Alkoxyfunktionen. Besonders bevorzugt sind Polymere P2, die zu 40 - 100 Gew.-%, ganz besonders bevorzugt zu 51 - 99 Gew.-% aus Monomeren der Formel II aufgebaut sind. Die summe der Bestandteile A) und B) in den Polymermischungen PM beträgt im allgemeinen 100 Gew.-%.

### Die Polyester

Die im Sinne der vorliegenden Erfindung anzuwendenden Polyester, die vorzugsweise thermoplastisch verarbeitbar sind, sind zu mindestens 70 Gew.-% und vorzugsweise bis zu 100 Gew.-% - abzüglich der Endgruppen - aus den Einheiten gemäß Formel (I) aufgebaut. Die restlichen Monomereinheiten bestehen entweder aus Mono-Hydroxycarbonsäuren wie p-Hydroxybenzoesäure oder bevorzugt aus Einheiten vom Typ 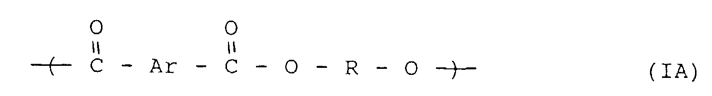 worin
- R: die oben bezeichneten Bedeutungen besitzt und
- Ar: für 1,3-Phenyliden oder Naphthyliden steht.

Besonders bevorzugt sind Polyester der Terephthalsäure, die zu weniger als 10 Gew.-% Iso-Phthalsäure-haltige Einheiten aufweisen. Besonders bevorzugt sind Polyester, die ausschließlich aus repetierenden Einheiten der Formel (I) aufgebaut sind, insbesondere vom Typ PET und PBT.

Die Polyester besitzen im allgemeinen ein Molgewicht Mw von > 10 x 10³ und bis ca. 500 x 10³ wobei das Molgewicht meist indirekt über die Lösungsviskosität ηₛₚ/C (in cm/g) - gemessen mittels Kapillarviskosimeter - bestimmt wird. Bevorzugt kommen die Polyester der Formel I zur Anwendung, insbesondere das Polyethylenterephthalat und das Polybutylenterephthalat aber auch z.B. Copolyester auf Basis von 1,4-Bis-(hydroxymethyl)cyclohexan, Terephthalsäure und Isophthalsäure sind geeignet. Betont werden soll, daß es sich bei den anzuwendenden Polyestern in der Regel um kommerzielle Produkte handelt. Die Polyester können gegebenenfalls noch an sich bekannte Zusätze, z.B. Nucleierungsmittel, Pigmente, Flammschutzmittel (vgl. Ullmann, loc.cit.) enthalten.

### Die Polyaryl(meth)acrylate

Im Sinne der vorliegenden Erfindung bilden halogenfreie Polyaryl(meth)acrylate die zweite Polymerkomponente der Polymermischungen PM. Die dafür infrage kommenden Monomeren sind an sich bekannt:
Genannt seien z.B. das Phenyl(meth)acrylat und dessen Alkyl-, Alkoxy- und Alkylamin-substituierten Derivate mit 1 - 6 Kohlenstoffatomen in den Alkylresten, insbesondere das p-Methoxyphenyl-(meth)acrylat. Ferner die N,N-Dialkylamino-substituierten Phenyl(meth)-acrylate, so z.B. das p-N,N-Dimethylaminophenylmethacrylat.
Von Interesse sind aber auch die nicht direkt mit der (Meth)acryloylgruppe verbundenen (Alkyloxy)phenylmethacrylate, s. z.B. das Phenoxyethylmethacrylat (R₂ = -CH₂-CH₂-O-). Besonders hervorzuheben sind jedoch Alkoxyphenyl(meth)acrylate insbesondere Methoxyphenyl- und das Phenylmethacrylat.

Die Polyaryl(meth)acrylate können auch aus mehreren Arten von Monomeren, vorzugsweise solchen der Formel II aufgebaut sein. Sofern die Polymeren P2 nicht ausschließlich aus Monomeren der Formel II aufgebaut sind, kommen als Comonomere sonstige Ester der (Meth)acrylsäure, insbesondere solche der Formel III 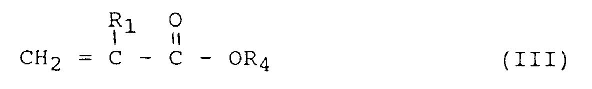 worin
- R₄: für einen aliphatischen Rest mit 1 bis 12 Kohlenstoffatomen, oder für einen mit mindestens einem Rest X substituierten Alkylrest mit 2 bis 8 Kohlenstoffatomen, wobei X für eine -OH, -OR₅ oder eine -NR₆R₇-Gruppe steht, wobei R₅ für einen Alkylrest mit 1 bis 6 Kohlenstoffatomen oder einen Alkoxyrest mit 1 bis 6 Kohlenstoffatomen und R₆ für Wasserstoff oder einen Alkylrest mit 1 bis 6 Kohlenstoffatomen und R₇ für einen Alkylrest mit 1 bis 6 Kohlenstoffatomen steht oder worin R₆ und R₇ gegebenenfalls unter Einbeziehung eines weiteren Stickstoffs oder eines Sauerstoffs einen fünf- oder sechsgliedrigen, vorzugsweise gesättigten Ring bilden oder Styrol, p- oder α-Methylstyrol
infrage.

Besonders bevorzugt sind solche Polymeren P2, die weniger als 10 Gew.-%, insbesondere weniger als 1 Gew.-% und ganz besonders bevorzugt 0 Gew.-% an Monomeren mit Epoxygruppen (wie Glycidylmethacrylat) oder Säuregruppen wie (Meth)acrylsäuren enthalten.

Die Herstellung der Homo- bzw. Copolymerisate P2 erfolgt nach bekannten Verfahren. (Vgl. H. Rauch-Puntigam, Th. Völker, Acryl- und Methacrylverbindungen, Springer-Verlag 1967). Wenn auch häufig prinzipiell eine Herstellung durch anionische Polymerisation oder Group-Transfer-Polymerisation (siehe auch O.W. Webster et al., J. Am. Chem. Soc., 105, 5706 (1983)) möglich ist, so ist doch die bevorzugte Herstellungsform die radikalische Polymerisation. Dabei kann sowohl Substanz- als Lösungs- oder Emulsionspolymerisation durchgeführt werden.

Bei den radikalischen Polymerisationsverfahren finden vorzugsweise die üblichen radikalischen Initiatoren, beispielsweise peroxidische, insbesondere organische Peroxiverbindungen oder Azoverbindungen in Mengen von 0,01 bis 1 Gew.-% (bezogen auf die Monomeren) Anwendung. Als Regler können z.B. die üblichen Schwefelregler in den bewährten Konzentrationen z.B. in Mengen von 0,01 bis 2 Gew.-% (bezogen auf die Monomeren) angewendet werden.

Die Molgewichte M der Polymerisate P2 liegen in der Regel oberhalb von 3 000 im allgemeinen im Bereich von 10 000 bis 2 000 000, vorzugsweise 20 000 bis 300 000 (Lichtstreuung). Bei der Auswahl der Monomerkomponenten, die als Comonomere bei P2 eingesetzt werden sollen, ist darauf zu achten, daß die Glastemperatur Tg des resultierenden Polymerisats die technische Anwendbarkeit des Gesamtsystems PM nicht einschränkend beeinflußt.

### Die Verbundsysteme

Die gute Verträglichkeit des Polyarylacrylats mit dem Polyester gestattet es, gut haftende Schichten von Polyarylacrylat auf Polyester zu erzeugen.
So können z.B. gut aufeinander haftende Verbundsysteme aus Polyester und Polyarylacrylat hergestellt werden. Dazu kann beispielsweise Polyester mit Polyarylacrylat lackiert werden. Besonderes Interesse gilt der Coextrusion bzw. dem Cospritzguß. Von besonderem Interesse sind solche Polymerkompositionen, in denen ein Formkörper (z.B. eine Platte oder Folie) aus Polyester mit einem Mantel aus Polyarylacrylat umgeben ist.

Das als Mantel verwendete Polyarylacrylat enthält an sich bekannte UV-Schutzmittel in Anteilen um 0,1 - 10 Gew.-% und schützt so die Gesamtkomposition gegen Verwitterung. Zimtsäure und deren Derivate sind dabei ausgeschlossen.

Im Vergleich zu nicht verträglichen Polymerkompositionen haben diese Polymerkompositionen aus Polyester und Polyarylacrylat folgende Vorteile: a) bessere Haftung der Schichten aufeinander, b) kein Abfallproblem, da die Abfallstücke aufgrund der guten Verträglichkeit problemlos wieder eingearbeitet werden können.

Die folgenden Beispiele dienen zur Erläuterung der Erfindung (wobei sich die symbolischen Bezeichnungen auf die Formel II beziehen).

Die Bestimmung der Viskositätszahl J. [ml/g] erfolgt in Anlehnung an DIN 51 562, Teile 2 und 3 und DIN 7745, Teil 2.

### BEISPIELE

### Beispiel 1

### Synthese des Poly-p-methoxyphenylmethacrylats

250 g p-Methoxyphenylmethacrylat werden in 375 g Toluol unter Erwärmen gelöst, es wird filtriert. Nach Zugabe von 0,25 g Dodecylmercaptan und 0,125 g tert.Butylperneodecanoat (gelöst in 10 g Toluol) wird unter Schutzgas (N₂) 4 Stunden bei 80 - 85 Grad C gerührt. Nach Abkühlen auf Raumtemperatur wird das Polymere in Methanol ausgefällt und in Vacuum getrocknet. Es resultiert ein pulvriges Polymer (J = 27,4 ml/g).

### Beispiel 2

### Synthese eines hochmolekularen Polyphenylmethacrylates durch Emulsionspolymerisation

In einem 3 l-Witt'schen Topf mit Kühler, Rührer, Thermometer und Schutzgaseinleitung (Stickstoff) werden

| | |
|---|---|
| 600 g | Phenylmethacrylat |
| 900 g | Wasser |
| 2 g | Emulator (Nonylphenol, umgesetzt mit 6 Mol Ethylenoxid, sulfatiert, Natrium-Salz) |

mit 500 Up emulgiert (2 Minuten), dann wird die Rührerdrehzahl auf 150 Up zurückgenommen, 2 ppm FeSo₄ (bezogen auf das Monomere) und 0,4 g Kaliumperoxodisulfat zugesetzt und auf 40 Grad C erwärmt. Sobald die Innentemperatur 40 Grad C erreicht hat, wird die Polymerisation durch Zugabe von 0,33 g Na₂S₂O₅ (in 5 g Wasser) gestartet. Im Verlauf der Polymerisation steigt die Innentemperatur auf ca. 60 Grad C (Badtemperatur: 43 Grad C). Nach ca. 1 1/2 Stunden wird auf Raumtemperatur gekühlt.
Zur Gewinnung des Polymerisat-Feststoffs wird die Dispersion eingefroren (-15 Grad C) und in heißem Wasser aufgetaut. Der erhaltene Feststoff wird abfiltriert und bei 90 Grad C im Vacuum getrocknet. (J = 280 ml/g)

### Beispiel 3

### Synthese eines hochmolekularen Copolymeren durch Emulsionspolymerisation

Man verfährt wie in Beispiel 12, wählt jedoch andere Einwaagen

| | |
|---|---|
| 800,0 g | Phenylmethacrylat |
| 200,0 g | p-Methoxyphenylmethacrylat |
| 1 500,0 g | Wasser |
| 3,3 g | C₁₅-Paraffinsulfonat, Natrium-Salz |

Nach Emulgieren mit 500 Up und Zugabe von 2 ppm FeSO₄ und 0,67 g KPS wird bei 50 Grad C durch Zugabe von 0,33 g Na₂S₂O₅ die Polymerisation gestartet. Nach Beendigung der Polymerisation wird die Dispersion auf Raumtemperatur gekühlt und zur Gewinnung des Polymerisat-Feststoffes eingefroren und in heißem Wasser wieder aufgetaut (Gefrierkoagulation).
Es wird filtriert, mehrfach mit Wasser gewaschen und anschließend bei 90 Grad C im Vacuum getrocknet.
J = 298 ml/g.

### Beispiel 4

### Beschichtung von Polybutylenterephthalat mit den Polymeren gemäß den Beispielen 1 - 3

Spritzgußplättchen (Dicke 3 mm) aus PBT (Vestodur® 1000 der Fa. Hüls AG) werden mit ca. 10 - 20 %igen Lösungen der Polymeren gemäß den Beispielen 1 - 3 in Methylpyrrolidon beschichtet (Teflon-Rakel, Naßschichtdicke: 120 um, Dicke des getrockneten Films: 12 - 25 µm) und anschließend bei erhöhter Temperatur getrocknet (75 Grad C im Vacuum). Einige Proben werden zusätzlich 1 Stunde bei 200 Grad C getempert.
Nach dem Abkühlen wird die Haftung der Schicht auf dem PBT gemäß DIN 53151 bestimmt.

### Beispiel 5

### PBT mit einer Beschichtung aus Poly-p-methoxyphenylmethacrylat (Polymere gemäß Beispiel 1)

Messungen an der bei 75 Grad C getrockneten Probe:
Tesatest: 0 % Abriß
Gitterschnitt nach DIN 53151 mit nachfolgendem Tesatest: 5 % Abriß.
Messungen an der bei 200 Grad C getemperten Probe:
Gitterschnitt nach DIN 53151 mit nachfolgendem Tesatest: 0 % Abriß.

### Beispiel 6

### PBT mit einer Beschichtung aus Polyphenylmethacrylat (Polymeres gemäß Beispiel 2)

Messung an der bei 200 Grad C getemperten Probe:
Gitterschnitt nach DIN 53151 mit nachfolgendem Tesatest: 0 % Abriß.

### Beispiel 7

### PBT mit einer Beschichtung aus dem Copolymeren gemäß Beispiel 3

Messung an der bei 200 Grad C getemperten Probe:
Gitterschnitt nach DIN 53151 mit nachfolgendem Tesatest: 0 % Abriß.
Polymere gemäß den Beispiele 2 und 3 zeigen demnach hervorragende Haftung auf PBT.

### Beispiel 8 (Vergleichsbeispiel)

Man wiederholt den Versuch gemäß Beispiel 4 mit Polymethylmethacrylat als Beschichtungsmaterial (Plexiglas® 8N der Fa. Röhm).

Messung an der bei 75 Grad C getrockneten Probe:
Tesatest: 100 % Abriß

Messung an der bei 200 Grad C getemperten Probe:
Gittreschnitt nach DIN 53151 mit nachfolgendem Tesatest: 100 % Abriß.

Das Polymethylmethacrylat zeigt demnach keinerlei Haftung auf PBT.

### Beispiel 9

### Herstellen eines Verbundsystems durch Verpressen

0,24 g fein gemahlenes Polymerisat gemäß Beispiel 1 wird auf eine 3 mm dicke 24 cm² große PBT-Platte aufgebracht und bei 175 Grad C aufgepreßt (Druck: 4 KN/cm², Preßdauer: 5 Minuten). Nach dem Abkühlen erhält man eine hochglänzende Verbundplatte aus PBT mit Poly-p-methoxymethacrylat-Deckschicht. Gitterschnitt nach DIN 53151 mit nachfolgendem Tesatest: 0 % Abriß.

## Patentansprüche

1. Mehrschichtige Verbundsysteme, aufgebaut aus Polyester P1, bestehend zu mindestens 70 Gew.-% aus Einheiten gemäß Formel I 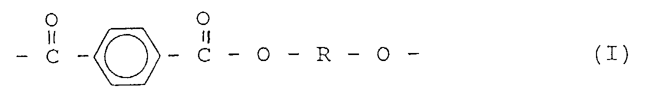 worin
R für einen Rest -(CH₂)ₘ- oder für einen Rest 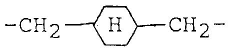 steht und wobei
m für eine Zahl von 2 bis 6 steht
und Poly(meth)acrylat P2, aufgebaut zu 20 - 100 Gew.-% aus halogenfreien Monomeren gemäß Formel II: 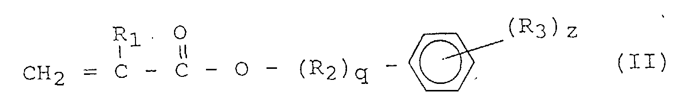 worin
R₁ für Wasserstoff oder Methyl
R₂ für eine abstandhaltende Gruppe mit 1 - 6 Gliedern, vorzugsweise ausgewählt aus der Gruppe der Alkylidene mit 1 bis 6 Kohlenstoffatomen in der Kette und der Gruppe -(CH₂)p-O-, wobei q null oder 1 und p eine Zahl von 2 - 6 bedeutet,
R₃ für einen Alkylrest, Alkoxyrest oder Aminoalkyl- oder Dialkylrest mit 1 bis 6 Kohlenstoffatomen und z für null, 1 oder 2 steht
dadurch gekennzeichnet,
daß das Poly(meth)acrylat P2 als Deckschicht auf dem Polyester P1 aufgebracht ist, sowie daß das Poly(meth)acrylat P2 0,1 bis 10 Gew.-% bezogen auf P2 an herkömmlichen UV-Absorbern enthält, wobei Zimtsäure und deren Derivate ausgeschlossen sind.

2. Formkörper aus mehrschichtigen Verbundsystemen gemäß Anspruch 1.

## Claims

1. Multilayered composite systems synthesised from polyester P1 comprising at least 70 wt.% of units according to formula I 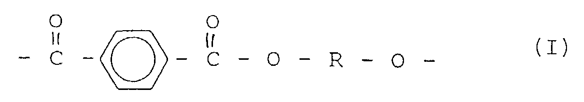 wherein
R is a group -(CH₂)ₘ- or a group 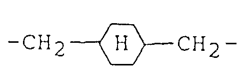 and wherein
m is an integer of 2 to 6
and poly(meth)acrylate P2, synthesised from 20-100 wt.% of halogen-free monomers according to formula II 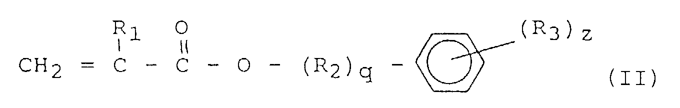 wherein
R₁ is hydrogen or methyl
R₂ is a spacer group having 1 to 6 members, preferably selected from the group of alkylidenes having 1 to 6 carbon atoms in the chain and the group -(CH₂)p-O-, wherein q is zero or 1 and p is an integer of 2 - 6,
R₃ is an alkyl group, alkoxy group or an aminoalkyl or -dialkyl group having 1 to 6 carbon atoms and z is zero, 1 or 2,
characterised in that
poly(meth)acrylate P2 is applied as a top layer onto polyester P1, and in that poly(meth)acrylate P2 comprises 0.1 to 10 wt.%, based on P2, of conventional ultraviolet absorbers, cinnamic acid and derivatives thereof being excluded.

2. Moulded articles made of multilayered composite systems according to claim 1.

## Revendications

1. Systèmes composites à plusieurs couches constituées de polyester P1, constitué à au moins 70 % en poids d'unités selon la formule I 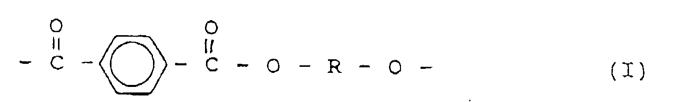 dans laquelle
R représente un radical -(CH₂)ₘ- ou un radical 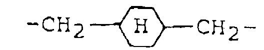 où
m représente un nombre de 2 à 6,
et de poly(méth)acrylate P2, constitué de 20 à 100 % en poids de monomères non halogénés selon la formule (II) : 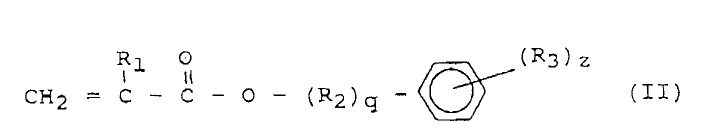 dans laquelle
R₁ représente un hydrogène ou un méthyle,
R₂ représente un groupe maintenant un intervalle, avec de 1 à 6 chaînons, de préférence choisis dans le groupe des alkylidènes avec 1 à 6 atomes de carbone dans la chaîne et du groupe -(CH₂)p-O-, où q vaut 0 ou 1 et p représente un nombre de 2 à 6,
R₃ représente un radical alkyle, un radical alcoxy ou un radical amino-alkyle ou dialkyle avec 1 à 6 atomes de carbone et z vaut 0, 1 ou 2,
caractérisés en ce que
le poly(méth)acrylate P2 est déposé comme couche de revêtement sur le polyester, ainsi que par le fait que le poly(méth)acrylate P2 contient de 0,1 à 10 % en poids, par rapport à P2, d'absorbants d'UV habituels, l'acide cinnamique et ses dérivés étant exclus.

2. Corps moulé fait de systèmes composites à plusieurs couches selon la revendication 1.
